(19) Europäisches Patentamt

European Patent Office

Office européen des brevets

(11) **EP 0 614 290 B1**

(12) **FASCICULE DE BREVET EUROPEEN**

(45) Date de publication et mention
de la délivrance du brevet:
**16.08.2000 Bulletin 2000/33**

(51) Int. Cl.⁷: **H04B 7/26**

(21) Numéro de dépôt: **94400443.1**

(22) Date de dépôt: **02.03.1994**

(54) **Procédé pour allouer un intervalle de temps au sein d'une trame à un mobile accédant à une cellule de communication et station émettrice-réceptrice de base mettant en oeuvre ce procédé**

Verfahren zur Zuteilung eines Zeitschlitzes in einem Rahmen für ein auf eine Kommunikationszelle zugreifendes Mobil und Sende/Empfangsbasisstation dafür

Method for allocating a time slot in a frame to a mobile accessing a communication cell and transmitting-receiving base station using the method

(84) Etats contractants désignés:
**AT BE CH DE DK ES FR GB IT LI NL SE**

(30) Priorité: **03.03.1993 FR 9302472**

(43) Date de publication de la demande:
**07.09.1994 Bulletin 1994/36**

(73) Titulaire: **ALCATEL
75382 Paris Cédex 08 (FR)**

(72) Inventeur: **Dupuy, Pierre
F-75014 Paris (FR)**

(74) Mandataire: **El Manouni, Josiane
COMPAGNIE FINANCIERE ALCATEL
Dépt. Propr. Industrielle,
30, avenue Kléber
75116 Paris (FR)**

(56) Documents cités:
**EP-A- 0 295 227          EP-A- 0 564 429
WO-A-91/13502**

**Description**

La présente invention concerne un procédé pour allouer un intervalle de temps au sein d'une trame à un mobile accédant à une cellule de communication.

Elle vise également une station émettrice-réceptrice de base mettant en oeuvre ce procédé.

Dans un réseau de transmission radio à Accès Multiple à Répartition dans le Temps AMRT, (TDMA en anglais), plusieurs émetteurs (8 dans le cas du GSM) utilisent la même ressource radio en affectant un intervalle de temps (Time Slot en anglais) à chacun de ces mobiles.

Dans le cas du système GSM ("Global System for Mobile Communications": système global pour des communications de mobiles), ces intervalles de temps ont une durée de 577 µs, constituant une trame de 4,6 ms.

Dans la plupart des systèmes de radiotéléphonie, certaines fréquences sont émises en permanence pour permettre aux mobiles de les repérer plus facilement car pendant une communication, ils ne disposent que d'un intervalle de temps très court ainsi qu'on l'a vu précédemment: pour qu'ils puissent réaliser une mesure fiable, cette puissance doit toujours être la même.

Par ailleurs, dans le cas d'un système GSM qui utilise une structure AMRT, l'intervalle de temps 0 est utilisé sur la voie balise pour transmettre des informations particulières :

- dans le sens descendant, il sert à indiquer les paramètres généraux de la cellule à tous les mobiles, à les appeler et à leur allouer un canal radio ;
- dans le sens montant, il sert aux mobiles pour indiquer qu'ils veulent une connexion avec la cellule (signal d'accès).

Un des problèmes liés à ce type de structure temporelle est dû au fait que le temps de propagation d'un signal radio ne peut plus être négligé dès que le mobile s'éloigne trop de la base radio qui le gère.

Cette base est appelée BTS pour "Base Transceiver Station" (Station d'émission/réception de Base).

Dans un système GSM actuel, ce problème est résolu de la façon suivante: lorsqu'un mobile accède pour la première fois à la cellule en émettant un signal d'accès (signal Random Access en anglais), il le fait avec un retard strictement égal à 3 intervalles de temps; le choix de cette valeur -fixe- sera expliqué plus loin. Lorsque la BTS reçoit ce signal, elle mesure l'écart temporel ente ce signal et sa propre référence temporelle de réception qui est décalée d'exactement 3 intervalles de temps par rapport à son émission. Ce temps d'arrivée correspond au temps aller-retour d'une onde radio entre la BTS et le mobile. La station émettrice-réceptrice de base va alors allouer un intervalle de temps au mobile en lui indiquant de combien de temps il doit avancer son émission.

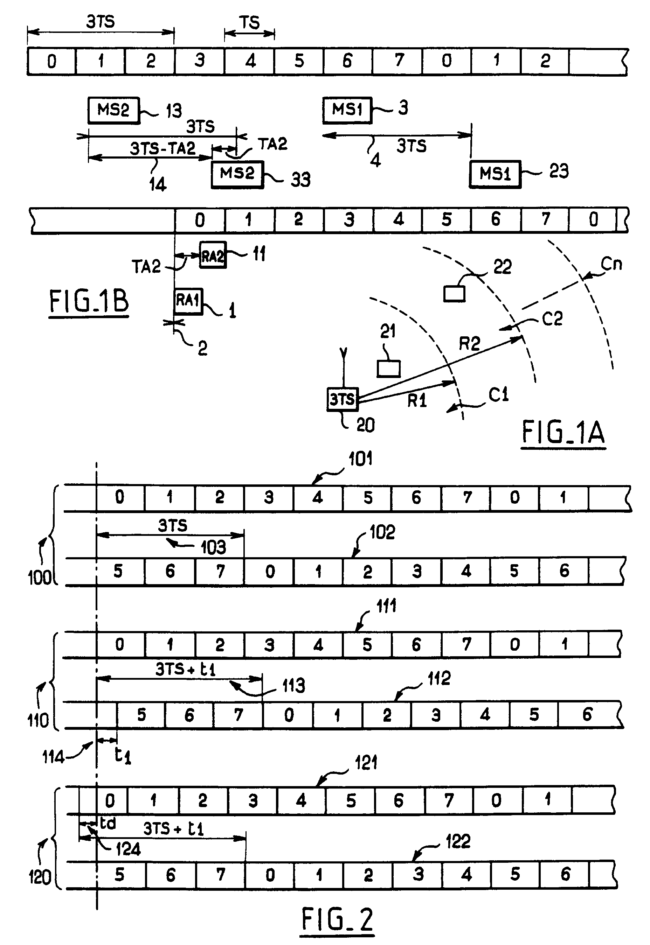

Par exemple, en référence à la figure 1, le mobile MS1 21, à proximité immédiate de la station émettrice-réceptrice de base 20, envoie un Random Access RA1 1, avec un retard nul 2, et se voit allouer l'intervalle de temps 6 (3). Il émet alors avec un retard égal à 3TS-0, la valeur 0 lui étant indiquée au moment de l'affectation de l'intervalle de temps 6.

De la même façon, le mobile MS2 22, éloigné de la station émettrice-réceptrice de base 20, envoie un Random Access RA2 2, avec un retard TA2, et se voit allouer l'intervalle de temps 1 (13). Il émet alors avec un retard égal à 3TS-TA2, la valeur TA2 lui ayant été indiquée au moment de l'affectation de l'intervalle de temps 1.

Le choix du délai entre la réception et l'émission par le mobile a été dicté par le fait qu'en 8 intervalles de temps, le mobile doit :

- écouter son intervalle de temps sur la fréquence f1;
- émettre sur son intervalle de temps sur la fréquence f2 ; et
- mesurer le niveau de puissance sur une fréquence f3 afin de déterminer son niveau de réception des cellules avoisinantes.

Pour travailler sur ces 3 fréquences, la solution la plus économique consiste à utiliser un seul synthétiseur de fréquence. Comme les synthétiseurs à synthèse directe sont d'un coût trop élevé pour un système où le prix du terminal est un élément déterminant du succès commercial, un synthétiseur à boucle de phase est la solution la plus adaptée. Le temps d'établissement de tels synthétiseurs étant relativement long, il importe de répartir au mieux les 3 intervalles de temps cités plus haut pendant lesquels la fréquence générée doit être stable.

Si on considère que le mobile mesure le niveau de puissance sur la fréquence f3 pendant un intervalle de temps, on trouve que le mobile dispose de (8-3)/3 = 1,7 intervalle de temps pour changer de fréquence. Comme par ailleurs le mobile doit pouvoir avancer son émission d'un temps TA, il a été choisi de séparer les intervalles de temps de réception et d'émission d'un temps égal à 2 TS.

Le temps restant pour commuter d'une fréquence à l'autre devient donc :

- 1,5 TS de f2 à f3 et de f3 à f1 ;

- 2TS-TA de f1 à f2.

On voit qu'en choisissant TA maximum égal à 0,5 TS, la contrainte est toujours de 1,5 TS pour passer d'une fréquence à une autre. En fait, d'autres impératifs ont conduit à choisir une valeur maximum de TA égale à 63 bits de modulation sur l'air, soit 0,41 TS. Une de ces contraintes est que les Random Access doivent toujours être entièrement reçus pendant l'intervalle de temps, quelle que soit la distance du mobile : plus on accepte que le mobile soit loin, moins le signal d'accès (Random Access) peut transporter d'information.

Le rappel historique de ce choix montre clairement qu'il n'est pas possible d'augmenter sans limite la valeur maximum de TA pour pouvoir gérer des mobiles de plus en plus loin : la limite actuelle de TA ne peut pas être dépassée sans remettre en cause la structure électronique du mobile et la longueur utile du message Random Access.

Pour de véritables mobiles, l'intérêt économique de cellules à grande couverture est assez faible car les besoins en puissance d'émission rendent vite les mobiles très encombrants. L'intérêt économique est par contre élevé pour de "faux" mobiles utilisés en poste fixe avec une antenne directionnelle pointant vers la station émettrice-réceptrice de base, il est possible d'obtenir une communication radio pour un coût d'infrastructure sans commune mesure avec celui d'un réseau filaire. La seule limite devient alors celle de l'horizon.

Pour pouvoir échanger des données avec des mobiles distants de plus de 35 km, la solution habituellement préconisée est relativement simple comme cela est exposé dans l'ouvrage "The GSM System" (le système GSM) écrit et publié par Michel MOULY et Marie-Bernadette PAUTET (ISBN: 2-9507190-0-7); les intervalles de temps de réception sont groupés par 2: 0+1, 2+3, 4+5 et 6+7 et la station émettrice-réceptrice de base utilise une fenêtre de réception variable en fonction de la distance du mobile, suivant plusieurs modes de réalisation possibles :

- on peut toujours indiquer un temps TA=0 au mobile et déplacer la fenêtre de réception en fonction de la distance réelle entre la station émettrice-réceptrice de base et le mobile. Dans ce cas, la structure temporelle ne permet de gérer que 4 mobiles, une paire d'intervalles de temps étant toujours nécessaire pour chaque mobile;
- on peut gérer le mobile de façon classique jusqu'à 35 km et toujours indiquer un temps TA équivalent à 35 km au delà. La gestion est plus délicate mais permet de n'utiliser 2 intervalles de temps que lorsque c'est réellement nécessaire.

Dans tous les cas, les intervalles de temps 0 et 1 de la voie balise utilisés pour la réception des signaux de Random Access doivent être réservés à ce seul usage, les signaux de Random Access de mobiles lointains étant à cheval sur ces deux intervalles de temps.

Le bilan global d'un tel système est plutôt mauvais, comparé à une station émettrice-réceptrice de base classique :

- les équipements d'émission et de réception analogiques ne sont utilisés qu'à 50 % de leur capacité initiale, ce qui est d'autant plus pénalisant pour les émetteurs qu'ils doivent être de forte puissance, au vu des distances en jeu ;
- les équipements de traitement numériques auront sauf précautions de réalisation particulières et délicates le même défaut de sous utilisation. cette limitation reste vraie pour l'intervalle de temps 0 de la voie balise, quel que soit de choix de réalisation, à cause du problème du signal d'accès "Random Access".

Il en découle que les fréquences seront largement sous-utilisées. Ce point est d'importance moindre car d'une part les besoins en fréquences sont a priori limités si on utilise de très grandes cellules et d'autre part les possibilités de réutilisation de fréquence sont beaucoup plus élevées qu'avec les petites cellules car, les lois de propagation variant au moins comme le carré de la distance, de grandes cellules permettent de réutiliser plus souvent les mêmes fréquences.

Le but de la présente invention est de remédier à ces inconvénients en proposant un procédé qui permette de regrouper l'ensemble des mobiles situés dans chaque cellule gérée par la station émettrice-réceptrice de base dans une même structure temporelle.

Suivant l'invention, le procédé pour allouer un intervalle de temps au sein d'une trame à un mobile de communication accédant à une cellule parmi un ensemble de cellules concentriques autour d'une cellule de base gérées par une station émettrice-réceptrice de base communicant avec chaque mobile présent dans une cellule selon une structure temporelle de trame descendante de la station émettrice-réceptrice de base vers des mobiles et selon une structure temporelle de trame montante des mobiles vers ladite station émettrice-réceptrice de base, est caractérisé en ce que, pour chaque cellule, la structure temporelle montante est décalée par rapport à la structure temporelle descendante d'un retard égal à la somme d'un décalage de base entre les structures temporelles respectivement descendante et montante de base de la cellule de base et d'un temps de décalage dépendant du rang de la cellule au sein dudit ensemble de cellules.

Ainsi, avec le procédé selon l'invention, il est possible de mieux utiliser les intervalles de temps des structures temporelles correspondant à des cellules concentriques, et ainsi de contribuer à une utilisation plus rationnelle des équipements d'émission-réception. En considérant par exemple une cellule de base de rayon égal à 35 km , si un mobile à moins de 35 km de l'antenne de cette cellule de base essaie de se connecter sur la station émettrice-réceptrice de base gérant les mobiles à plus de 35 km, son signal d'accès Random Access ne sera pas décodé par cette station émettrice-réceptrice de base car il n'est pas dans la bonne fenêtre temporelle; il viendra au contraire polluer l'intervalle de temps de cette station émettrice-réceptrice de base dans le sens montant. Le même problème existe pour l'intervalle de temps dans le cas inverse. Dans tous les cas, il est possible d'éviter cette pollution en inhibant l'intervalle de temps correspondant mais c'est un solution coûteuse, surtout tenu compte du faible niveau de pollution radio entraîné. Il est à noter que dans ces cas-là, le mobile essaiera naturellement sur la "bonne" cellule" après un certain nombre d'essais infructueux nombre défini par le système dans les information générales diffusées sur la voie balise.

Suivant un autre aspect de l'invention, il est proposé une station émettrice-réceptrice de base pour gérer un ensemble de cellules de communication, comprenant des moyens de couplage avec un centre de commutation de base, des moyens de couplage avec une antenne d'émission, des moyens pour préamplifier des signaux issus d'une antenne de réception, mettant en oeuvre le procédé selon l'invention, caractérisée en ce qu'elle comprend en outre, pour chaque cellule, des moyens numériques pour gérer les structures temporelles correspondant à ladite cellule, ces moyens numériques de gestion étant d'une part reliés aux moyens de couplage avec le centre de commutation de base, et, d'autre part, reliés en émission à des moyens d'amplification de puissance placés en amont des moyens de couplage d'antenne d'émission, et en réception aux moyens de préamplifiction de puissance.

D'autres particularités et avantages de l'invention apparaîtront encore dans la description ci-après. Aux dessins annexés donnés à titre d'exemples non limitatifs :

-    la figure 1A représente respectivement un mobile situé à proximité d'une station émettrice-réceptrice de base et un mobile éloigné de celle-ci;
-    la figure 1B représente des chronogrammes d'affectation des intervalles de temps selon l'art antérieur ;
-    la figure 2 illustre différentes structures temporelles obtenues avec le procédé selon l'invention ;
-    la figure 3 montre un exemple de réalisation d'une station émettrice-réceptrice de base adaptée pour mettre en oeuvre le procédé selon l'invention ;
-    la figure 4 illustre un mode préféré de réalisation du procédé selon l'invention, mettant en oeuvre une allocation dynamique de canaux;
-    la figure 5A illustre un mode particulier de mise en oeuvre du procédé assurant une optimisation d'un saut de fréquence ;
-    la figure 5B représente les structures temporelles correspondant au mode de mise en oeuvre de la figure 5A ;
-    la figure 6 représente un exemple de mise en oeuvre du procédé selon l'invention pour deux cellules utilisant deux jeux de fréquences ;
-    la figure 7 représente un exemple de mise en oeuvre du procédé selon l'invention pour trois cellules utilisant trois fréquences ;
-    la figure 8A représente un exemple de mise en oeuvre du procédé selon l'invention combinant des sauts de fréquence ;
-    la figure 8B représente une structure temporelle intégrant dans ses trames des mobiles lointains et des mobiles rapprochés avec du saut de fréquence; et
-    la figure 9 illustre différentes situations de passage d'un mobile d'une cellule à l'autre.

On va maintenant expliquer les principes mis en oeuvre dans le procédé selon l'invention et leur application dans le cas du système GSM.

Une application du procédé selon l'invention à un système GSM vise à regrouper l'ensemble des mobiles situés dans une cellule entre 35 et 70 km sur un même structure temporelle, "décalée" de 35 km par rapport à une structure temporelle de base correspondant à une cellule de base entre 0 et 35 km.

Sur la figure 2, on a représenté différentes structures temporelles :

Le chronogramme 100 représente la structure temporelle de base définie par le système GSM : les structures temporelles descendantes 101 et montantes 102 sont décalées d'exactement 3.TS 103.

Le chronogramme 110 représente un premier mode de réalisation où la structure temporelle descendante 111 est synchrone de la structure de base 101, la structure montante 102 étant décalée d'un temps t1 114 par rapport à la structure de base 102, conduisant à un décalage effectif de 3TS+t1 113 entre les structures descendantes et montantes.

Le chronogramme 120 représente un deuxième mode réalisation où le décalage est identique mais réalisé de façon inverse au cas précédent. Le choix du mode de réalisation dépendra en fait essentiellement de la structure interne de la station émettrice-réceptrice de base à modifier pour réaliser l'invention.

Le mode de réalisation 110 sera préféré lorsqu'il existe, à l'intérieur de la station émettrice-réceptrice de base, une structure de stockage temporaire d'information dans le sens descendant pendant un durée au moins égale à t1.

La réalisation 120 sera préférée lorsqu'il existe, à l'intérieur de la station émettrice-réceptrice de base, une structure de stockage temporaire d'information dans le sens montant pendant un durée au moins égale à t1.

Un panachage de ces deux réalisation 110 et 120 pourra également être utilisé dans les cas intermédiaires. Si cela est nécessaire, un dispositif de stockage temporaire sera ajouté à la station émettrice-réceptrice de base.

Le temps t1 114, 124 sera préférentiellement déterminé par l'expression suivante:

$$t1 = k \cdot (R - M),$$

où:

R est la rayon de la cellule de base, en l'occurrence 35 km dans le cas présent du système GSM ;
M est une marge, distance destinée à permettre un recouvrement entre deux cellules concentriques ; et

- k est le rang de la cellule dans laquelle se trouve le mobile.
- La valeur k=0 correspond en fait à la cellule de base, telle que définie dans un système GSM actuel: la formule ne s'applique pas et t1=0;
- la valeur k=1 correspond aux mobiles compris entre (35 - marge) km et (70-marge) km.
- la valeur k=2 correspond aux mobiles compris entre (70 -2 marge) km et (105-2 marge) km.

On voit donc qu'il est possible d'aller au delà de 70 km en juxtaposant plusieurs cellules en couronnes.

Dans la suite, on indiquera qu'une cellule présente un rayon de 35, 70, ... km. Il faut cependant remarquer que ces distances doivent être corrigées suivant la relation donnée ci-dessus pour tenir compte de la marge de recouvrement entre cellules adjacentes.

Chacune de ces cellules doit évidemment être pourvue d'une voie balise qui monopolise un intervalle de temps 0. Le bilan économique, comparé à l'état de l'art est donc, pour deux structures temporelles :

- selon l'art antérieur : 2x4-1= 7 mobiles utilisables entre 0 et 70 km ;
- avec le procédé selon l'invention : 2 x (8-1)= 14 mobiles utilisables 7 entre 0 et 35 km et 7 entre 35 et 70 km. on verra plus loin qu'il est possible d'améliorer la souplesse de cette invention.

On peut par ailleurs noter que la réalisation de ces cellules est particulièrement économique puisque tous les éléments, à l'exception des équipements analogiques et numériques de gestion des structures temporelles, sont communs: bien qu'il y ait 2 ou plusieurs cellules, il n'y a qu'une antenne d'émission et de réception, qu'un préamplificateur d'antenne de réception. De même, un amplificateur d'antenne d'émission unique peut être utilisé pour toutes les cellules.

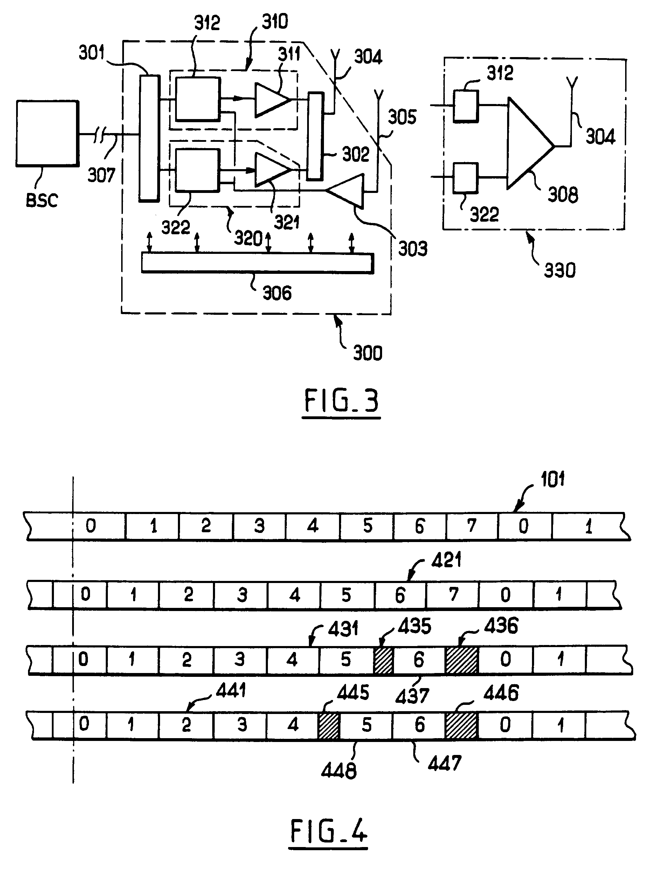

La figure 3 montre une réalisation permettant de couvrir les zones [0-35] km et [35-70]km à partir d'une station émettrice-réceptrice de base normale 300.

La station émettrice-réceptrice de base 300 est reliée au centre de commutation de base BSC par une connexion de type Abis ou équivalent 307 et aux mobiles par les antennes d'émission 304 et de réception 305.

Les éléments communs à une station de base selon l'art antérieur et à une station de base selon l'invention sont :

- un dispositif 301 de couplage vers le BSC ;
- un dispositif 302 de couplage vers l'antenne d'émission ;
- des éléments de base 306, notamment des horloges, et alimentations ;
- un préamplificateur d'antenne 303.

Chaque équipement de gestion de structure temporelle 310, 320 comprend :

- des amplificateurs de puissance 311, 321. Les amplificateurs de puissance 311 et 321 peuvent être remplacés par un amplificateur unique 308 ;
- des équipements de gestion numérique 312, 322 pour gérer la partie numérique de chaque équipement de gestion de structure temporelle 310, 320 ;
- Ces équipements incluent en réception une conversion analogique numérique qui n'est généralement pas réalisée au niveau du préamplificateur d'antenne 303.

Lorsque le nombre d'équipements de gestion de structure temporelle devient important, il peut être intéressant d'ajouter, sans sortir du cadre de l'invention, un commutateur électronique permettant de connecter n'importe quel équipement numérique 312, 322, ... à n'importe quel amplificateur de puissance 311, 321, en particulier pour pouvoir réaliser une fonction de saut de fréquence.

De la même façon, il est possible de prévoir un tel commutateur en réception, entre les récepteurs et la partie numérique afin d'utiliser des récepteurs travaillant à fréquence fixe. Le principe exposé reste toujours applicable.

Pour réaliser la couverture indiquée, il suffit que l'équipement de gestion de structure temporelle 320 soit décalé temporellement comme indiqué en figure 2, en référence aux configurations 110 ou 120, tous les autres équipements étant inchangés.

A partir de cette réalisation de base, il est facile d'augmenter la souplesse du système en autorisant une plus grande variété de configurations de mobiles entre 0 et 35 km d'une part, et 35 et 70 km d'autre part.

Cette amélioration sera montrée avec les configurations 100 et 120 mais peut également être réalisée avec les configurations 100 et 110 par exemple.

Le procédé consiste à configurer dynamiquement les intervalles de temps avec ou sans l'avance à l'émission:

L'équipement 310 (resp. 320) émet et reçoit l'intervalle de temps 0 suivant la structure 100 (resp. 120).

Lorsque les mobiles accèdent à une cellule, on leur alloue préférentiellement les intervalles de temps de plus faible numéro dans leur cellule gérée par les équipements 310 ou 320.

Si par exemple la cellule gérée par l'équipement 310 vient à être pleine (voie balise+7 mobiles) et que la cellule gérée par l'équipement 320 a encore au moins les intervalles de temps 6 et 7 libres lorsqu'un mobile veut accéder à la cellule gérée par les équipements 310, 320 va le prendre en charge sur l'intervalle de temps 6 qui sera émis sans avance temporelle.

L'intervalle de temps 7 devient alors inutilisable, que ce soit pour des mobiles proches ou lointains.

Si les intervalles de temps 6 et 7 n'avaient pas été libres, un ou deux handovers internes à 320 auraient permis de les libérer si deux autres intervalles de temps avaient été libres dans 320, évidemment.

Dans ce mode de réalisation la structure temporelle 120 de la figure 2 est modifiée conformément à la figure 4.

La structure temporelle de base 101 est reproduite pour donner l'échelle des temps.

La structure temporelle 421 correspond au cas où tous les intervalles de temps 1-7 d'une trame sont utilisés pour des mobiles situés dans la seconde cellule [35-70] km.

Lorsque l'intervalle de temps 6, référencé par 437, est utilisé pour un mobile entre 0 et 35 km, on obtient la structure temporelle 431 où les intervalles de temps 435 et 436 sont perdus.

Pendant ces intervalles de temps, il n'est pas possible d'arrêter l'émission. Le choix du train de données à émettre est libre, dès qu'il n'est pas possible de le confondre avec les signaux GSM "Frequency Correction Channel" (canal de correction de fréquence) ou "SCH Synchronization Channel" (canal de synchronisation SCH). On pourrait, bien que ce choix ne soit pas limitatif, émettre un début de rafale factice ou de bourrage ("Dummy burst" dans la terminologie GSM) pour l'intervalle de temps 435 et la fin de cette même rafale factice pour l'intervalle de temps 436.

Si deux intervalles de temps, par exemple de rang 5 et 6, référencés respectivement par 448 et 447, sont utilisés pour deux mobiles situés dans la cellule [0-35] km, deux intervalles de temps 445, 446 seront inutilisés.

Le procédé peut être répété jusqu'à ce que les intervalles de temps 1 à 6 soient utilisés en mode "proche".

On constate que, quel que soit le nombre d'intervalles de temps utilisés entre 0 et 35 km, seul un intervalle de temps sera perdu : il devient possible de gérer 13 mobiles à une distance quelconque comprise entre 0 et 70 km ou 14 mobiles lorsqu'ils sont également répartis entre 0 et 35 km d'une part et 35 et 70 km d'autre part.

On peut également prévoir que l'équipement 310 gère des mobiles à plus de 35 km, en lui faisant avancer son émission comme dans l'équipement 320: il perd l'intervalle de temps 6 plus généralement i et il gère ce mobile sur l'intervalle de temps 7 plus généralement sur les intervalles de temps i+1, ..., 7.

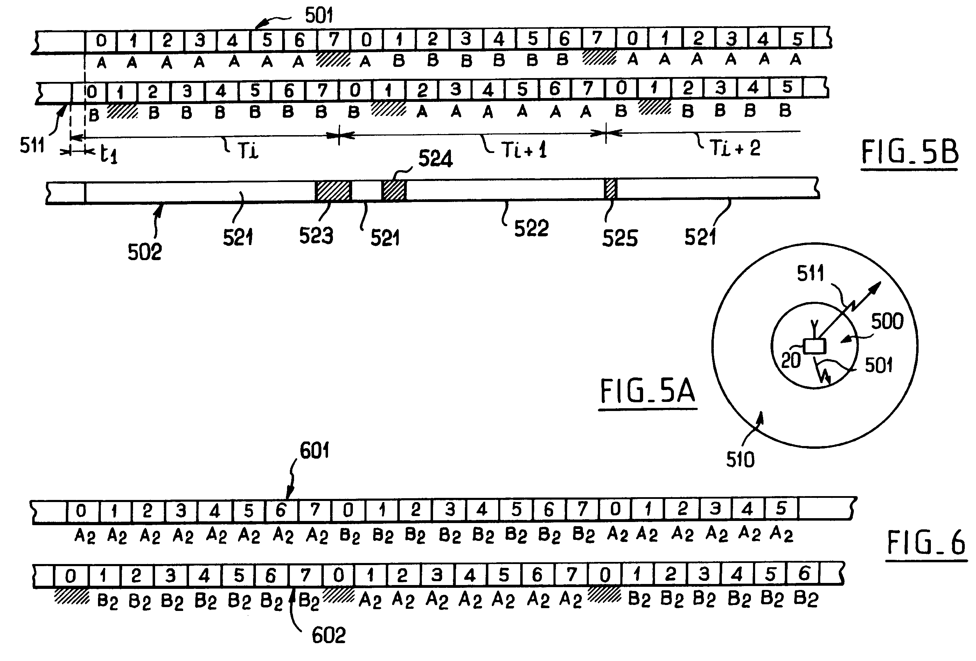

Selon un mode avantageux de réalisation de l'invention, il est également possible de changer dynamiquement les fréquences de cellule afin de pouvoir réaliser des sauts de fréquence. Un exemple de mise en oeuvre du procédé selon l'invention permettant d'optimiser de tels sauts de fréquence est illustré par les figures 5A et 5B. Une première cellule 500 couvre la zone de 0 à 35 km. Sa voie balise utilise une première fréquence A. L'intervalle de temps 7 est inutilisé. Une seconde cellule 510 couvre la zone de 35 à 70 km. Sa voie balise utilise une seconde fréquence B. L'intervalle de temps 1 est inutilisé. L'émission de la cellule correspond à un train 511. Sur les structures temporelles 501 et 511, sont représentés des intervalles de temps ainsi que les fréquences utilisées pendant les intervalles de temps utiles, pour les trames i, i+1 et i+2 partiellement. Pour la commodité de l'explication, on a supposé que les fréquences A et B sont échangées à chaque trame mais cet échange peut aussi bien être pseudo-aléatoire, dès lors que les deux cellules utilisent un algorithme commun permettant que les deux choix soient exclusifs. Dans le cadre d'un système GSM, on peut obtenir une telle exclusion de l'une des façons suivantes :

- en utilisant un saut de fréquence cyclique ;
- en utilisant un saut de fréquence pseudo-aléatoire utilisant le même numéro de séquence HSN, ("Hopping Sequence Number" dans la terminologie GSM: numéro de séquence de saut). Dans les deux cas, il importe que les deux cellules soient synchronisées, à la différence temporelle t1 déjà mentionnée près.

Si on observe l'utilisation de la fréquence A dans le temps, en référence au train temporel 502, on peut distinguer plusieurs zones caractéristiques :

- zone 521 : la fréquence est utilisée pour gérer les mobiles sous la couverture de la cellule 500;
- zone 522 : la fréquence est utilisée pour gérer les mobiles sous la couverture de la cellule 501;
- zone 523 : pendant cet intervalle de temps, la fréquence n'est pas allouée à un mobile. La cellule 500 transmet logiquement une "rafale factice" (Dummy Burst, en anglais) tel que défini par la recommandation GSM ; et
- zones 524, 525: ces intervalles de temps incomplets peuvent être traités comme les intervalles de temps 435, 436 précités, en référence à la figure 4; on peut ainsi émettre un début de rafale factice ou de bourrage pour la zone 524 et la fin ce cette rafale pour la zone 525.

L'exemple de réalisation avec saut de fréquence qui vient d'être décrit pour deux fréquences et deux cellules peut être facilement appliqués à d'autres cas de figure.

On peut par exemple envisager plus d'une fréquence par cellule. Si les cellules utilisent les fréquences A1, A2,...An pour la cellule 500 et B1, B2,...Bn pour la cellule 501, tous les mobiles utiliseront un ensemble résultant de fréquences A1, A2,...An, B1, B2,...Bm en utilisant les mêmes intervalles utiles.

Dans un autre mode de réalisation, les fréquences des voies balises A1, B1 seront traitées comme indiqué plus haut, les fréquences A2,...An et B1,...Bn étant utilisées conformément à la figure 6. On observe que dans les structures temporelles 601, 602 représentées, la cellule de rayon 35 km utilise alternativement les fréquences A2 et B2 sur tous les intervalles de temps, et la cellule [35-70] km utilise l'autre fréquence sur tous les intervalles de temps, à l'exception de l'intervalle de temps 0 qui est inutilisé pour éviter les conflits. On peut noter qu'en cas de besoin, il est possible d'utiliser l'intervalle de temps 0 dans cette cellule s'il est libéré dans l'autre de façon statique ou dynamique en fonction de la charge de trafic de chacune des cellules. Dans tous les cas où il y a plus d'une fréquence par cellule, les intervalles de temps où les émetteurs n'ont rien à émettre, n'ont pas à être remplis par un signal puisqu'il ne s'agit pas de voies balises. Il faut noter que le numéro de l'intervalle de temps comme la cellule peuvent d'ailleurs être affectés dynamiquement.

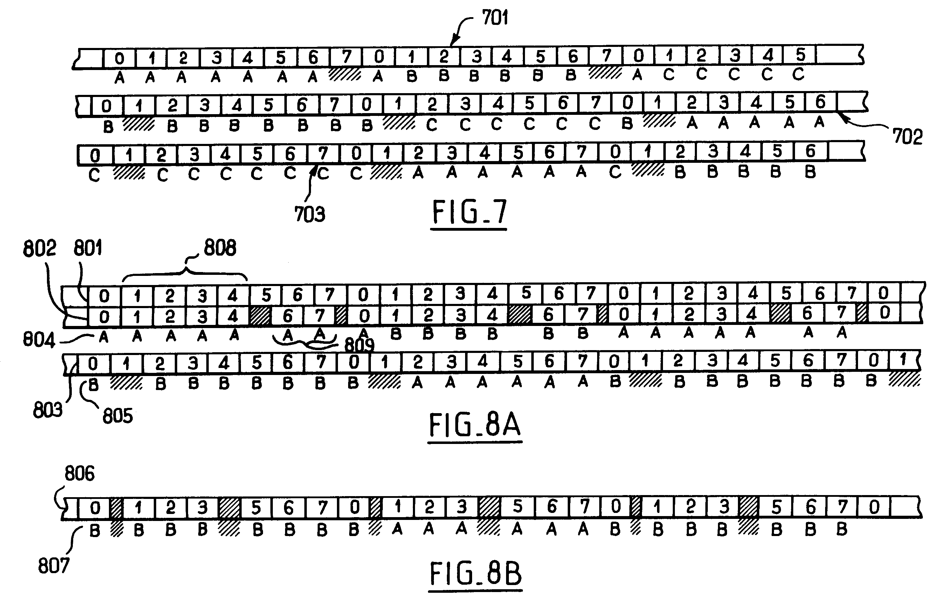

Un second cas de figure concerne trois cellules concentriques. Le saut de fréquence se fait alors sur trois fréquences, conformément à la figure 7. On observe que le principe utilisé est directement dérivé du principe illustré en figure 5, le décalage temporel entre les deux cellules extrêmes étant inférieur à un intervalle de temps.

On considère ainsi une station émettrice-réceptrice de base BTS gérant trois cellules concentriques utilisant respectivement une première, une seconde et une troisième fréquences A, B, C. Les seconde et troisième structures temporelles 702, 703 correspondant respectivement aux seconde et troisième cellules sont décalées respectivement d'un premier et second temps de décalage par rapport aux première et seconde structures temporelles 701, 702; le décalage entre la première et la troisième structures 701, 703 est inférieur à la durée d'un intervalle de temps.

Pour chaque structure temporelle 701, 702, 703, la fréquence allouée à chaque trame successive est changée, par exemple de façon cyclique ou pseudo-aléatoire, un intervalle de temps de rang prédéterminé étant maintenu inutilisé dans chaque trame de chaque structure temporelle 701, 702, 703 de sorte qu'à tout instant, les intervalles de temps respectifs de chaque structure temporelle présentent des fréquences distinctes ou sont inutilisés de façon à éviter tout conflit de fréquence.

Dans un troisième cas de figure, le délai entre les cellules extrêmes est supérieur à un intervalle de temps. Dans ce cas de figure, on peut :

- supprimer un intervalle de temps supplémentaire par cellule pour éviter le recouvrement temporel;
- regrouper les cellules en groupes comportant au plus trois cellules consécutives et effectuer le saut de fréquence à l'intérieur de chacun de ces groupes.

Il est également possible de combiner les réalisations correspondant aux figures 4 d'une part, et aux figures 5, 6 ou 7 d'autre part, afin d'obtenir une allocation dynamique des intervalles de temps et un saut de fréquence. Pour la simplicité de la représentation, seule la configuration avec deux cellules utilisant chacune une fréquence est représentée sur la figure 8A qui comprend :

- une structure temporelle 801 de base de la première cellule [0-35] km; les fréquences associées aux intervalles de temps sont indiquées en 804 ;

- une structure temporelle 802 correspondant au cas où quatre mobiles sont à moins de 35 km (intervalles de temps 1-4) et deux mobiles sont compris entre 35 et 70 km (intervalles de temps 6 et 7) ;
- une structure temporelle 803 de base de la seconde cellule [35-70] km; les fréquences associées aux intervalles de temps sont indiquées en 805.

Bien entendu, ce principe est utilisable pour une répartition différente des intervalles de temps entre les deux cellules, le principe consistant toujours à définir un groupe de mobiles proches utilisant un ensemble 808 d'intervalles de temps consécutifs et un groupe de mobiles lointains utilisant un ensemble 809 d'intervalles de temps. Il est également possible de mélanger complètement les intervalles de temps et les mobiles dès lors que :

- la cellule [0-35] km gère les mobiles proches à partir de l'intervalle de temps 1 et les mobiles lointains à partir de l'intervalle de temps 6 ;
- la cellule [35-70] km gère les mobiles proches à partir de l'intervalle de temps 1 et les mobiles lointains à partir de l'intervalle de temps 7.

La structure temporelle 806 , dont les fréquences associées sont données sur la bande 807, représentée en figure 8B, correspond au cas où les intervalles de temps 1, 2 et 3 sont affectés à des mobiles proches, les intervalles de temps 5, 6 et 7 étant affectés à des mobiles lointains. On observe donc que chaque cellule peut gérer six mobiles à n'importe quelle distance avec un saut de fréquence, soit douze mobiles pour l'ensemble des deux cellules.

Le tableau suivant fournit pour chaque configuration et mode de réalisation le nombre de mobiles pouvant être gérés dans chaque cellule par la station émettrice-réceptrice de base.

| CAS | | mobile | |
|---|---|---|---|
| | [0-35] km | [35-70] km | 0-70 km |
| Allocation non dynamique | 7 | 7 | - |
| Allocation dynamique sans saut de fréquence | 7 ou x | 7 ou 13-x | - ou 13 |
| Saut de fréquence | 6 | 6 | 0 |
| Saut de fréquence + allocation dynamique | x | 12-x | 12 |

La variable x représente la marge de manoeuvre ou latitude offerte aux systèmes de gestion, par exemple un centre de commutation de base BSC ou tout autre système en amont.

Il est également possible de mettre en oeuvre le procédé selon l'invention dans une station émettrice-réceptrice de base qui ne comporte pas de cellule centrale, mais uniquement des cellules annulaires concentriques.

On va maintenant décrire un aspect particulier du procédé selon l'invention concernant le passage d'un mobile d'une cellule à l'autre. Au cours de ce passage, une procédure spécifique, appelée "handover" dans la terminologie GSM ou "handoff" en américain, est mise en oeuvre. Elle consiste à retarder d'une valeur prédéterminée l'émission des informations numériques que le mobile doit transmettre, afin d'être en synchronisme avec la station émettrice-réceptrice de base de la nouvelle cellule.

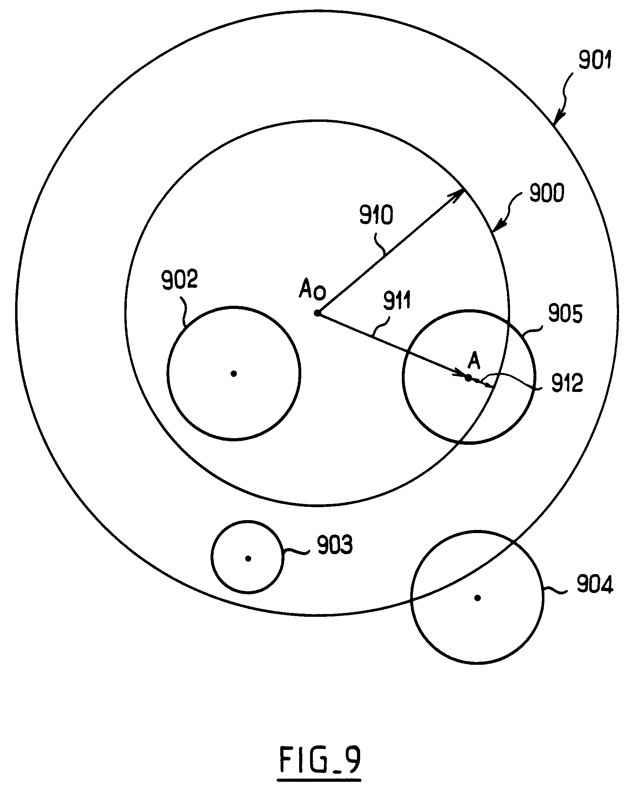

Plusieurs situations caractéristiques de passage d'une cellule à l'autre sont représentées sur la figure 9 qui comprend:

- deux cellules concentriques 900, 901 gérées avec le procédé selon l'invention,
- une cellule 902 entièrement recouverte par la cellule 900;
- une cellule 903 entièrement recouverte par la cellule 901, mais pas par la cellule 900;
- une cellule 904 en recouvrement partiel avec la cellule 901 uniquement;
- une cellule 905 en recouvrement partiel avec les cellules concentriques 900 et 901.

Lorsqu'un mobile est dans une de ces cellules et doit la quitter du fait de son déplacement, on appliquera préférentiellement les règles suivantes, en lieu et place des règles habituelles de bilan de puissance:

- à partir de la cellule de départ 902, mise en oeuvre de la procédure de handover vers la cellule 900, jamais vers la cellule 901;
- à partir de la cellule de départ 903, mise en oeuvre de la procédure de handover vers la cellule 901, jamais vers la cellule 900;
- à partir de la cellule de départ 904, mise en oeuvre de la procédure de handover vers la cellule 901 ou une autre cellule, à l'exclusion de la cellule 900;
- à partir de la cellule de départ 905: si le mobile dans la cellule 905 présente un décalage temporel correspondant à une distance inférieure à la distance 912 correspondant au rayon intérieur 910 de la cellule 900 diminué de la distance 911 entre les antennes respectives Ao, A des cellules 900 et 905, une procédure de handover sera mise en oeuvre vers la cellule 900. Cette règle s'applique si l'antenne A de la cellule 905 est sous la couverture de la cellule 900. Elle doit être inversée dans le cas contraire.

Si le critère énoncé ci-dessus n'est pas satisfait, c'est-à-dire si à partir de la cellule de départ 905 le mobile dans cette cellule 905 présente un décalage temporel correspondant à une distance supérieure à la distance 912 correspondant au rayon intérieur 910 de la cellule 900 diminué de la distance 911 entre les antennes respectives Ao, A des cellules 900 et 905, la procédure de handover sera exécutée préférentiellement vers la cellule concentrique à l'intérieur de laquelle se trouve l'antenne de la cellule 905. En cas d'échec de cette première procédure de handover, un nouvel essai sera fait vers l'autre cellule concentrique. Dans le cas d'une cellule de départ non omnidirectionnelle, la procédure de handover sera effectuée vers la cellule qui recouvre le plus la cellule de départ.

Bien sûr, l'invention n'est pas limitée aux exemples qui viennent d'être décrits et de nombreux aménagements peuvent être apportés à ces exemples sans sortir du cadre de l'invention. En particulier, le procédé selon l'invention n'est pas limité aux exemples de rayon de cellule présentés dans la description et peut être appliqué à d'autres systèmes de communication présentant des rayons de cellule différents.

## Revendications

1. Procédé pour allouer un intervalle de temps au sein d'une trame à un mobile de communication (21, 22) accédant à une cellule parmi un ensemble de cellules concentriques (C2, Cn) autour d'une cellule de base (C1) gérées par une station émettrice-réceptrice de base (BTS) (20) communicant avec chaque mobile présent dans une cellule (C1, C2, Cn) selon une structure temporelle de trame descendante (101, 111, 121) de la station émettrice-réceptrice de base (BTS) (20) vers des mobiles et selon une structure temporelle de trame montante (102, 112, 122) des mobiles vers ladite station émettrice-réceptrice de base (BTS) (20), caractérisé en ce que, pour chaque cellule (C1, C2, Cn), la structure temporelle montante (112, 122) est décalée par rapport à la structure temporelle descendante (101, 111) d'un retard égal à la somme d'un décalage de base (3.TS) entre les structures temporelles respectivement descendante (101) et montante (102) de base de la cellule de base (C1) et d'un temps de décalage (t1) dépendant du rang de la cellule au sein dudit ensemble de cellules (C2, Cn).

2. Procédé selon la revendication 1, caractérisé en ce que la structure temporelle descendante (111) est en synchronisme avec la structure temporelle descendante de base (101), la structure temporelle montante (112) étant retardée dudit temps de décalage (t1) par rapport à ladite structure temporelle montante de base (102).

3. Procédé selon la revendication 1, caractérisé en ce que la structure temporelle montante (122) est en synchronisme avec la structure temporelle montante de base (102), la structure temporelle descendante (121) étant avancée dudit temps de décalage (t1) par rapport à la structure temporelle descendante de base (101).

4. Procédé selon la revendication 1, caractérisé en ce que la structure temporelle montante est retardée d'un premier temps par rapport à la structure temporelle montante de base et en ce que la structure temporelle descendante est avancée d'un second temps par rapport à la structure temporelle descendante de base, la somme desdits premier et second temps étant égale au temps de décalage (t1).

5. Procédé selon l'une quelconque des revendications précédentes, ledit ensemble de cellules (C1, C2, Cn) comprenant une cellule de base (C1) de rayon prédéterminé (R1) et des cellules concentriques (C2, Cn) en forme d'anneau d'épaisseur sensiblement égale au dit rayon (R1), et deux cellules adjacentes présentant un recouvrement partiel prédéterminé, caractérisé en ce que le temps de décalage (t1) est déterminé par la relation suivante :

$$t1 = k.(R - M)$$

où

R est le rayon de la cellule de base,

M représente une marge de recouvrement entre deux cellules adjacentes ; et

k correspond au rang de la cellule dans laquelle se trouve le mobile.

6. Procédé selon l'une quelconque des revendications précédentes, caractérisé en ce que lorsqu'un mobile entre dans une première cellule et émet une demande d'accès, si tous les intervalles de temps au sein d'une trame associée à ladite cellule sont occupés, on alloue audit mobile un intervalle de temps libre dans une trame associée à une seconde cellule adjacente à la première cellule, cet intervalle de temps affecté étant émis sans décalage temporel par rapport à ladite première cellule.

7. Procédé selon l'une quelconque des revendications précédentes, appliqué à une station émettrice-réceptrice de base (BTS) (20) gérant une première et une seconde cellules (500, 510) utilisant chacune sur leur voie de balise respective une première et une seconde fréquences (A, B), la structure temporelle en émission (511)de la seconde cellule (510) étant décalée d'un temps de décalage (t1) par rapport à la structure temporelle en émission (501) de la première cellule (500), caractérisé en ce que, dans chaque structure temporelle (501, 511), on effectue des changements de fréquence de sorte qu'à tout instant les allocations respectives de fréquence dans les deux structures temporelles (501, 511) soient exclusives, et en ce que, dans chaque trame de chaque structure temporelle, un intervalle de temps de rang prédéterminé (7, 1) est inutilisé.

8. Procédé selon l'une quelconque des revendications 1 à 6, appliqué à une station émettrice-réceptrice de base (BTS) gérant une première et une seconde cellules utilisant respectivement un premier ensemble de fréquences (A1, A2, An) et un second ensemble de fréquences (B1, B2, Bm), caractérisé en ce que pour au moins un couple de structures temporelles respectivement associées aux première et seconde cellules et utilisant respectivement une première fréquence (A1) et une seconde fréquence (B1) choisies respectivement parmi l'ensemble résultant de fréquences (A1, A2, An; B1, B2, Bm), on effectue des changements de fréquence de sorte qu'à tout instant, les allocations respectives de fréquence dans les intervalles de temps desdites structures temporelles respectives soient exclusives.

9. Procédé selon la revendication 8, appliqué à une station émettrice-réceptrice de base (BTS) gérant une première et une seconde cellules utilisant chacune sur leur voie de balise respective une première et une seconde fréquences de voie balise parmi respectivement un premier et un second ensemble de fréquences, caractérisé en ce que dans un premier couple de structures temporelles associées respectivement aux première et seconde cellules et utilisant les deux fréquences de voie balise, on effectue des changements de fréquence de sorte qu'à tout instant les allocations respectives de fréquence dans ces deux structures temporelles soient exclusives.

10. Procédé selon la revendication 9, caractérisé en ce que, dans les autres couples de structures temporelles (601, 602) associées respectivement aux première et seconde cellules et utilisant des première et seconde fréquences (A2, B2) appartenant respectivement aux premier et second ensemble de fréquences et autres que les fréquences de voie balise, on effectue des changements de fréquence, la première structure temporelle (601) utilisant pour chaque trame l'une ou l'autre desdites première et seconde fréquences (A2, B2) sur tous les intervalles de temps (0-7) et la seconde structure temporelle (602) utilisant pour ses intervalles de temps la fréquence non utilisée par la première structure (601), un intervalle de temps (0) étant maintenu inutilisé dans chaque trame de l'une quelconque desdites première et seconde structure temporelle (601, 602) pour éviter tout conflit de fréquence.

11. Procédé selon l'une quelconque des revendications 1 à 6, appliqué à une station émettrice-réceptrice de base (BTS) gérant trois cellules concentriques utilisant respectivement une première, une seconde et une troisième fréquences (A, B, C), les seconde et troisième structures temporelles (702, 703) correspondant respectivement aux seconde et troisième cellules étant décalées respectivement d'un premier et second temps de décalage déterminés par le procédé selon la revendication 5 par rapport aux première et seconde structures temporelles (701, 702), et le décalage entre la première et la troisième structures (701, 703) étant inférieur à la durée d'un intervalle de temps, caractérisé en ce que, pour chaque structure temporelle (701, 702, 703), la fréquence allouée à chaque trame successive est changée, un intervalle de temps de rang prédéterminé étant maintenu inutilisé dans chaque trame de chaque structure temporelle (701, 702, 703) de sorte que à tout instant, les intervalles de temps respectifs de chaque structure temporelle présentent des fréquences distinctes ou sont inutilisés de façon à éviter tout conflit de fréquence.

12. Procédé selon l'une quelconque des revendications 1 à 6, appliqué à une station émettrice-réceptrice de base (BTS) gérant un ensemble de cellules concentriques, les structures temporelles respectives des deux cellules extrêmes dudit ensemble présentant un décalage supérieur à un intervalle de temps, caractérisé en qu'un intervalle de temps supplémentaire est supprimé dans chaque trame des structures temporelles de chaque cellule.

**13.** Procédé selon l'une quelconque des revendications 1 à 6, appliqué à une station émettrice-réceptrice de base (BTS) gérant un ensemble de cellules concentriques, les structures temporelles respectives des deux cellules extrêmes dudit ensemble présentant un décalage supérieur à un intervalle de temps, caractérisé en qu'on regroupe les cellules en groupes comprenant au plus trois cellules consécutives et on effectue un saut de fréquence à l'intérieur de chacun de ces groupes.

**14.** Procédé selon l'une quelconque des revendications 1 à 6, appliqué à une station émettrice-réceptrice de base (BTS) gérant plusieurs cellules, notamment une première et une seconde cellule auxquelles sont associés une première et une seconde structures temporelles (801, 803), caractérisé en ce qu'il comprend la génération d'une première structure temporelle résultante (802) en synchronisme avec la première structure temporelle de base (801) et comprenant, dans chacune de ses trames, un premier groupe d'intervalles de temps consécutifs (0-4) alloués à des mobiles situés dans la première cellule et en synchronisme avec les intervalles de temps de même rang au sein de la première structure temporelle (801), un intervalle de temps inutilisé (5) et un second groupe d'intervalles de temps consécutifs (6, 7) alloués à des mobiles situés dans la seconde cellule et en synchronisme avec les intervalles de temps de même rang au sein de la seconde structure temporelle (803).

**15.** Procédé selon la revendication 14, appliqué à un ensemble de cellules à chacune desquelles est associé un ensemble de fréquences, caractérisé en ce qu'il comprend en outre des sauts de fréquence lors du passage d'une trame à l'autre.

**16.** Procédé selon l'une quelconque des revendications 7 à 15, caractérisé en ce que les changements de fréquence consistent en un saut de fréquence cyclique.

**17.** Procédé selon la revendication 16, caractérisé en ce que les changements de fréquence sont effectués à chaque nouvelle trame.

**18.** Procédé selon l'une quelconque des revendications 7 à 15, caractérisé en ce que les changements de fréquence consistent en des sauts de fréquence pseudo-aléatoires.

**19.** Procédé selon l'une quelconque des revendications précédentes, caractérisé en ce qu'à chaque fois qu'une structure temporelle comprend des intervalles de temps inutilisés pour un mobile, on émet dans ces intervalles de temps des morceaux d'une rafale factice ou de bourrage.

**20.** Procédé selon l'une quelconque des revendications précédentes, un mobile en déplacement, au cours d'une procédure de handover, devant passer d'une cellule de départ (902, 903, 904, 905) à une nouvelle cellule parmi un ensemble de cellules concentriques (900, 901) comprenant une cellule de base (900) et gérées par ledit procédé, caractérisé en ce que, pour déterminer cette nouvelle cellule, on substitue aux règles usuelles de bilan de puissance des règles de localisation de ladite cellule de départ (902, 903, 904, 905) par rapport auxdites cellules concentriques.

**21.** Procédé selon la revendication 20, caractérisé en ce que, dans le cas d'une cellule de départ (902) entièrement recouverte par la cellule de base (900), la procédure de handover est appliquée vers ladite cellule de base, à l'exclusion des autres cellules concentriques.

**22.** Procédé selon la revendication 20, caractérisé en ce que, dans le cas d'une cellule de départ (903) entièrement recouverte par une cellule (901) appartenant auxdites cellules concentriques (900, 901) mais pas par d'autres cellules concentriques de rayon inférieur à ladite cellule de départ, notamment la cellule de base (900), la procédure de handover est appliquée vers ladite cellule (901) recouvrant entièrement ladite cellule de départ (903).

**23.** Procédé selon la revendication 20, caractérisé en ce que, dans le cas d'une cellule de départ (904) recouverte partiellement par une cellule concentrique unique (901), la procédure de handover est appliquée vers ladite cellule unique (901) recouvrant partiellement ladite cellule de départ (904) à l'exclusion de toute autre cellule concentrique (900).

**24.** Procédé selon la revendication 20, caractérisé en ce que, dans le cas d'une cellule de départ (905) recouverte partiellement par une première et une seconde cellule concentrique (900, 901), la procédure de handover est appliquée vers la cellule concentrique (900) couvrant l'antenne (A) de la cellule de départ (905).

**25.** Procédé selon la revendication 24 caractérisé en ce que, si ladite procédure de handover a échoué et si le mobile présente dans ladite cellule de départ (905) un décalage temporel correspondant à une distance supérieure au rayon intérieur (910) de la première cellule concentrique (901) diminué de la distance (911) séparant les antennes respectives (Ao, A) de la première cellule concentrique (900) et de la cellule de départ (905), une nouvelle procédure de handover est appliquée vers la cellule concentrique (901) ne couvrant pas l'antenne (A) de la cellule de départ (905).

**26.** Station émettrice-réceptrice de base (BTS) (300) pour gérer un ensemble de cellules de communication (C1, C2, Cn), comprenant des moyens de couplage (301) avec un centre de commutation de base (BSC), des moyens de couplage (302) avec une antenne d'émission (304), des moyens (303) pour préamplifier des signaux issus d'une antenne de réception (305), mettant en oeuvre le procédé selon l'une quelconque des revendications précédentes, caractérisée en ce qu'elle comprend en outre, pour chaque cellule, des moyens numériques (312, 322) pour gérer les structures temporelles correspondant à ladite cellule, ces moyens numériques de gestion (312, 322) étant d'une part reliés aux moyens de couplage (301) avec le centre de commutation de base (BSC), et, d'autre part, reliés en sortie d'émission à des moyens d'amplification de puissance (311, 321) placés en amont des moyens de couplage (302) avec l'antenne d'émission (304), et en entrée de réception aux moyens de préamplification de puissance (303).

**27.** Station émettrice-réceptrice de base (BTS) selon la revendication 26, caractérisée en ce qu'à chaque cellule correspondent des moyens numériques de gestion distincts reliés en émission à des moyens d'amplification de puissance distincts, et en ce qu'elle comprend en outre des premiers moyens de commutation pour connecter n'importe les quels desdits moyens numériques de gestion distincts à n'importe lesquels desdits moyens d'amplification de puissance distincts.

**28.** Station émettrice-réceptrice de base (BTS) selon la revendication 26, caractérisée en ce qu'à chaque cellule correspondent des moyens numériques de gestion distincts (312, 322) reliés en émission à des moyens d'amplification communs (308).

**29.** Station émettrice-réceptrice de base (BTS) selon l'une quelconque des revendications 26 à 28, comprenant pour chaque cellule des moyens numériques de gestion distincts et reliée en réception à plusieurs récepteurs comprenant chacun des moyens de préamplification distincts, caractérisée en ce qu'elle comprend en outre des seconds moyens de commutation pour connecter n'importe lesquels desdits moyens de préamplification distincts à n'importe lesquels desdits moyens numériques de gestion distincts.

**30.** Station émettrice-réceptrice de base selon l'une quelconque des revendications 26 à 29, caractérisée en ce que l'ensemble de cellules comprend une cellule de base (C1) centrée sur ladite station émettrice-réceptrice de base (BTS) (20) et de rayon prédéterminé (R1) et des cellules concentriques (C2, Cn).

**31.** Station émettrice-réceptrice de base selon l'une quelconque des revendications 26 à 30, caractérisée en ce que l'ensemble de cellules comprend uniquement des cellules annulaires concentriques.

**32.** Application du procédé selon l'une quelconque des revendications 1 à 25 et de la station émettrice-réceptrice de base selon l'une quelconque des revendications 26 à 31 à un système de communication GSM, les rayons respectifs des première et seconde cellules étant sensiblement égaux à 35 km et à 70 km.

**Claims**

**1.** Method for allocating a timeslot in a frame to a mobile (21, 22) entering one cell of a set of concentric cells (C2, Cn) around a basic cell (C1) managed by a base transceiver station (BTS) (20) communicating with each mobile present in a cell (C1, C2, Cn) using a downlink frame temporal structure (101, 111, 121) from the base transceiver station (BTS) (20) to the mobiles and an uplink frame temporal structure (102, 112, 122) from the mobiles to said base transceiver station (BTS) (20), characterized in that for each cell (C1, C2, Cn) the uplink temporal structure (112, 122) is offset relative to the downlink temporal structure (101, 111) by a time-delay equal to the sum of a basic offset (3.TS) between the basic downlink temporal structure (101) and the basic uplink temporal structure (102) of the basic cell (C1) and an offset time (t1) dependent on the rank of the cell within said set of cells (C2, Cn) and in that a moving mobile during a handover procedure having to go from a departure cell (902, 903, 904, 905) to a new cell of a set of concentric cells (900, 901) comprising a basic cell (900) and managed by said method, to determine said new cell the usual power balance rules are replaced with rules for identifying said departure cell (902, 903, 904, 905) relative to said concentric cells.

2. Method according to claim 1 characterized in that in the case of a departure cell (902) entirely overlapped by the basic cell (900) handover is to said basic cell, to the exclusion of the other concentric cells.

3. Method according to claim 1 characterized in that in the case of a departure cell (903) entirely overlapped by a cell (901) of said concentric cells (900, 901) but not by other concentric cells having smaller radii than said departure cell, including the basic cell (900), handover is to said cell (901) entirely overlapping said departure cell (903).

4. Method according to claim 1 characterized that in the case of a departure cell (904) partially overlapped by a single concentric cell (901) handover is to said single cell (901) partially overlapping said departure cell (904), to the exclusion of any other concentric cell (900).

5. Method according to claim 1 characterized in that in the case of a departure cell (905) partially overlapped by first and second concentric cells (900, 901) handover is to the concentric cell (900) covering the antenna (A) of the departure cell (905).

6. Method according to claim 1 characterized in that if handover has failed and if the mobile has in said departure cell (905) a time offset corresponding to a distance greater than the inside radius (910) of the first concentric cell (901) less the distance (911) between the respective antennas (Ao, A) of the first concentric cell (900) and the departure cell (905), handover is to the concentric cell (901) not overlapping the antenna (A) of the departure cell (905).

7. Method according to one of claims 1 to 6 characterized in that the downlink temporal structure (111) is synchronized with the basic downlink temporal structure (101), the uplink temporal structure (112) being delayed by said offset time (t1) relative to said basic uplink temporal structure (102).

8. Method according to one of claims 1 to 6 characterized in that the uplink temporal structure (122) is synchronized with the basic uplink temporal structure (102), the downlink temporal structure (121) being advanced by said offset time (t1) relative to the basic downlink temporal structure (101).

9. Method according to one of claims 1 to 6 characterized in that the uplink temporal structure is delayed by a first time relative to the basic uplink temporal structure and in that the downlink temporal structure is advanced by a second time relative to the basic downlink temporal structure, the sum of said first and second times being equal to the offset time (t1).

10. Method according to any one of the preceding claims, said set of cells (C1, C2, Cn) comprising a basic cell (C1) of predetermined radius (R1) and concentric annular cells (C2, Cn) whose width is substantially equal to said radius (R1) and two adjacent cells having a predetermined partial overlap, characterized in that the offset time (t1) is determined by the following equation:

$$t1 = k.(R - M)$$

where R is the radius of the basic cell,
M is a margin of overlap between two adjacent cells, and
k is the rank of the cell in which the mobile is located.

11. Method according to any one of the preceding claims characterized in that when a mobile enters a first cell and sends a random access request if all the timeslots in a frame associated with said cell are occupied said mobile is allocated an available timeslot in a frame associated with a second cell adjacent the first cell, the timeslot allocated being transmitted with no time offset relative to said first cell.

12. Method according to any one of the preceding claims applied to a base transceiver station (BTS) (20) managing first and second cells (500, 510) each using on their respective beacon channel first and second frequencies (A, B), the transmit temporal structure (511) of the second cell (510) being offset by an offset time (t1) relative to the transmit temporal structure (501) of the first cell (500), characterized in that in each temporal structure (501, 511) frequency changes are effected so that at any time the respective frequency allocations in the two temporal structures (501, 511) are mutually exclusive and in that in each frame of each temporal structure a timeslot of predetermined rank (7, 1) is not used.

13. Method according to any one of claims 1 to 11 applied to a base transceiver station (BTS) managing first and second cells respectively using a first set of frequencies (A1, A2, An) and a second set of frequencies (B1, B2, Bn), characterized in that for at least a pair of temporal structures respectively associated with the first and second cells and respectively using a first frequency (A1) and a second frequency (B1) respectively chosen from the resulting set of frequencies (A1, A2, An; B1, B2, Bn), frequency changes are effected so that at any time the respective frequency allocations in the timeslots of said respective temporal structures are mutually exclusive.

14. Method according to claim 13 applied to a base transceiver station (BTS) managing first and second cells each using on their respective beacon channel first and second beacon channel frequencies from respective first and second sets of frequencies, characterized in that in a first pair of temporal structures respectively associated with the first and second cells and using the two beacon channel frequencies, frequency changes are effected so that at any time the respective frequency allocations in these two temporal structures are mutually exclusive.

15. Method according to claim 14 characterized in that in the other pairs of temporal structures (601, 602) respectively associated with the first and second cells and using the first and second frequencies (A2, B2) respectively belonging to the first and second set of frequencies and other than the beacon channel frequencies, frequency changes are effected, the first temporal structure (601) using for each frame one or other of said first and second frequencies (A2, B2) in all the timeslots (0-7) and the second temporal structure (602) using for its timeslots the frequency that is not used by the first structure (601), a timeslot (0) not being used in each frame of either one of said first and second temporal structures (601, 602) to avoid any frequency conflict.

16. Method according to any one of claims 1 to 11 applied to a base transceiver station (BTS) managing three concentric cells respectively using a first, a second and a third frequency (A, B, C), the second and third temporal structures (702, 703) respectively corresponding to the second and third cells being respectively offset by first and second offset times determined by the method according to claim 5 relative to the first and second temporal structures (701, 702) and the offset between the first and third structures (701, 703) being less than the duration of a timeslot, characterized in that for each temporal structure (701, 702, 703) the frequency allocated to each successive frame is changed, a timeslot of predetermined rank not being used in each frame of each temporal structure (701, 702, 703) so that at any time the respective timeslots of each temporal structure have different frequencies or are not used in order to prevent any frequency conflict.

17. Method according to any one of claims 1 to 11 applied to a base transceiver station (BTS) managing a set of concentric cells, the respective temporal structures of the two extreme cells of said set having an offset greater than the duration of a timeslot, characterized in that a further timeslot is eliminated in each frame of the temporal structures of each cell.

18. Method according to any one of claims 1 to 11 applied to a base transceiver station (BTS) managing a set of concentric cells, the respective temporal structures of the two extreme cells of said set having an offset greater than the duration of a timeslot, characterized in that the cells are grouped into groups comprising at most three consecutive cells and frequency hopping is effected within each group.

19. Method according to any one of claims 1 to 11 applied to a base transceiver station (BTS) managing a plurally of cells, including first and second cells associated with first and second temporal structures (801, 803), characterized in that it includes the generation of a resultant first temporal structure (802) synchronized with the basic first temporal structure (801) and including in each frame a first group of consecutive timeslots (0-4) allocated to mobiles in the first cell and synchronized with the timeslots of the same rank in the first temporal structure (801), an unused timeslot (5) and a second group of consecutive timeslots (6, 7) allocated to mobiles in the second cell and synchronized with the timeslots of the same rank in the second temporal structure (803).

20. Method according to claim 19 applied to a set of cells each associated with a set of frequencies, characterized in that it further comprises frequency hopping on passing from one frame to the other.

21. Method according to any one of claims 12 to 20 characterized in that the frequency changes consist in cyclic frequency hopping.

22. Method according to claim 21 characterized in that the frequency changes are effected in each new frame.

23. Method according to any one of claims 12 to 20 characterized in that the frequency changes consist in pseudo-random frequency hopping.

24. Method according to any one of the preceding claims characterized in that whenever a temporal structure comprises timeslots not used by a mobile portions of a dummy burst are transmitted during those timeslots.

25. Base transceiver station (BTS) (300) for managing a set of communication cells (C1, C2, Cn) implementing the method according to any one of the preceding claims.

26. Base transceiver station (BTS) (300) according to claim 25 characterized in that it comprises interface means (301) to a base station controller (BSC), interface means (302) to a transmit antenna (304), pre-amplifier means (303) for signals from a receive antenna (305), and in that it further comprises digital management means (312, 322) for each cell for managing temporal structures corresponding to said cell and connected to the interface means (301) to the base station controller (BSC) and having a transmit output connected to power amplifier means (311, 321) on the input side of the interface means (302) to the transmit antenna (304) and a receive input connected to the power pre-amplifier means (303).

27. Base transceiver station (BTS) according to claim 26 characterized in that to each cell there correspond separate digital management means the transmit parts of which are connected to separate power amplifier means and in that it further comprises first switching means for connecting any of said separate digital management means to any of said separate power amplifier means.

28. Base transceiver station (BTS) according to claim 26 characterized in that to each cell there correspond separate digital management means (312, 322) the transmit pads of which are connected to common amplifier means (308).

29. Base transceiver station (BTS) according to any one of claims 26 to 28 comprising for each cell separate digital management means the receive pads of which are connected to a plurality of receivers each comprising separate pre-amplifier means, characterized in that it further comprises second switching means for connecting any of said separate pre-amplifier means to any of said separate digital management means.

30. Base transceiver station according to any one of claims 26 to 29 characterized in that the set of cells comprises a basic cell (C1) centred on said base transceiver station (BTS) (20) and of predetermined radius (R1) and concentric cells (C2, Cn).

31. Base transceiver station according to any one of claims 26 to 30 characterized in that the set of cells comprises only concentric annular cells.

32. Application of the method according to any one of claims 1 to 24 and of the base transceiver station according to any one of claims 25 to 31 to a GSM communication system, the respective radii of the first and second cells being substantially equal to 35 km and 70 km.

**Patentansprüche**

1. Verfahren zur Zuteilung eines Zeitintervalis in einem Rahmen für ein mobiles Kommunikationsgerät (21, 22), das auf eine Zelle in einem Satz von konzentrischen Zellen (C2, Cn) um eine Basiszelle (C1) herum zugreift, die von einer Basis-Sende/Empfangsstation (BTS) (20) verwaltet werden, die mit jedem in einer Zelle (C1, C2, Cn) vorhandenen mobilen Gerät entsprechend einer zeitlichen Rahmenstruktur (101, 111, 121) in Abwärtsrichtung der Basis-Sende/Empfangsstation (BTS) (20) zu mobilen Geräten hin und entsprechend einer zeitlichen Rabmenstruktur (102, 112, 122) in Aufwärtsrichtung von mobilen Geräten zur Basis-Sende/Empfangsstation (BTS) (20) hin kommuniziert, dadurch gekennzeichnet, daß für jede Zelle (C1, C2, Cn) die zeitliche Struktur (112, 122) in Aufwärtsrichtung gegenüber der zeitlichen Struktur (101, 111) in Abwärtsrichtung um eine Verzögerung gleich der Summe aus einer Basisverschiebung (3.TS) zwischen den zeitlichen Basisstrukturen in Abwärts- (101) bzw. Aufwärtsrichtung (102) der Basiszelle (C1) und einer Verschiebungszeit (t1) verschoben ist, die vom Rang der Zelle im Satz von Zellen (C2, Cn) abhängt.

2. Verfahren nach Anspruch 1, dadurch gekennzeichnet, daß die zeitliche Struktur (11) in Abwärtsrichtung mit der zeitlichen Basisstruktur (101) in Abwärtsrichtung synchron ist, wobei zeitliche Struktur (112) in Aufwärtsrichtung in bezug auf die zeitliche Basisstruktur (102) in Aufwärtsrichtung um die Verschiebungszeit (t1) verzögert ist.

3. Verfahren nach Anspruch 1, dadurch gekennzeichnet, daß die zeitliche Struktur (122) in Aufwärtsrichtung mit der zeitlichen Basisstruktur (102) in Aufwärtsrichtung synchron ist, wobei die zeitliche Struktur (121) in Abwärtsrichtung in bezug auf die zeitliche Basisstruktur (101) in Abwärtsrichtung um die Verschiebungszeit (t1) vorgeschoben ist.

4. Verfahren nach Anspruch 1, dadurch gekennzeichnet, daß die zeitliche Struktur in Aufwärtsrichtung in bezug auf die zeitliche Basisstruktur in Aufwärtsrichtung um eine erste Zeit verzögert ist und daß die zeitliche Struktur in Abwärtsrichtung in bezug auf die zeitliche Basisstruktur in Abwärtsrichtung um eine zweite Zeit vorgeschoben ist, wobei die Summe der ersten und zweiten Zeit gleich der Verschiebungszeit (t1) ist.

5. Verfahren nach einem der vorhergehenden Ansprüche, wobei der Satz von Zellen (C1, C2, Cn) eine Basiszelle (C1) mit vorbestimmtem Radius (R1) und konzentrische Zellen (C2, Cn) in Form eines Rings mit einer Stärke im wesentlichen gleich dem Radius (R1) umfaßt und zwei benachbarte Zellen eine vorbestimmte teilweise Überdeckung aufweisen, dadurch gekennzeichnet, daß die Verschiebungszeit (t1) durch die folgende Beziehung bestimmt ist:

$$t1 = k.(R - M)$$

worin

R    der Radius der Basiszelle ist,
M    einen Bereich der Überdeckung zwischen zwei benachbarten Zellen darstellt und
k    dem Rang der Zelle entspricht, in welcher sich das mobile Gerät befindet.

6. Verfahren nach einem der vorhergehenden Ansprüche, dadurch gekennzeichnet, daß, wenn ein mobiles Gerät in eine erste Zelle eintritt und eine Zugangsanforderung sendet, wenn alle Zeitintervalle in einem zu dieser Zelle gehörigen Rahmen besetzt sind, dem mobilen Gerät ein freies Intervall in einem Rahmen zugeteilt wird, der zu einer der ersten Zelle benachbarten zweiten Zelle gehört, wobei dieses zugewiesene Zeitintervall ohne zeitliche Verschiebung in bezug auf die erste Zelle gesendet wird.

7. Verfahren nach einem der vorhergehenden Ansprüche, das bei einer Basis-Sende/Empfangsstation (BTS) (20) angewendet wird, die eine erste und eine zweite Zelle (500, 510) verwaltet, die jeweils auf ihren jeweiligen Kennzeichnungskanälen eine erste und eine zweite Frequenz (A, B) nutzen, wobei die zeitliche Struktur bei Sendung (511) der zweiten Zelle (510) in bezug auf die zeitliche Struktur bei Sendung (501) der ersten Zelle (500) um eine Verschiebungszeit (t1) verschoben ist, dadurch gekennzeichnet, daß in jeder zeitlichen Struktur (501, 511) Frequenzwechsel so ausgeführt werden, daß zu jedem Zeitpunkt die jeweiligen Frequenzzuteilungen in den beiden zeitlichen Strukturen (501, 511) ausschließlich sind, und daß in jedem Rahmen jeder zeitlichen Struktur ein Zeitintervall mit vorbestimmtem Rang (7, 1) ungenutzt ist.

8. Verfahren nach einem der Ansprüche 1 bis 6, das bei einer Basis-Sende/Empfangsstation (BTS) angewendet wird, die eine erste und eine zweite Zelle verwaltet, die einen ersten Satz von Frequenzen (A1, A2, An) bzw. einen zweiten Satz von Frequenzen (B1, B2, Bm) nutzen, dadurch gekennzeichnet, daß für wenigstens ein Paar zeitlicher Strukturen, die zu den ersten bzw. zweiten Zellen gehören und eine erste Frequenz (A1) bzw. eine zweite Frequenz (B1) nutzen, die aus dem resultierenden Satz von Frequenzen (A1, A2, An; B1, B2, Bm) ausgewählt sind, Frequenzwechsel so ausgeführt werden, daß zu jedem Zeitpunkt die jeweiligen Frequenzzuteilungen in den Zeitintervallen der jeweiligen zeitlichen Strukturen ausschließlich sind.

9. Verfahren nach Anspruch 8, das bei einer Basis-Sende/Empfangsstation (BTS) angewendet wird, die eine erste und eine zweite Zelle verwaltet, die jeweils auf ihrem jeweiligen Kennzeichnungskanal eine erste und eine zweite Kennzeichnungskanalfrequenz aus einem ersten bzw. einem zweiten Satz von Frequenzen nutzen, dadurch gekennzeichnet, daß in einem ersten Paar von zeitlichen Strukturen, die zur ersten bzw. zweiten Zelle gehören und die beiden Kennzeichnungskanalfrequenzen nutzen, Frequenzwechsel so ausgeführt werden, daß zu jedem Zeitpunkt die jeweiligen Frequenzzuweisungen in diesen beiden zeitlichen Strukturen ausschließlich ist.

10. Verfahren nach Anspruch 9, dadurch gekennzeichnet' daß in den weiteren Paaren von zeitlichen Strukturen (601, 602), die zur ersten bzw. zweiten Zelle gehören und erste und zweite Frequenzen (A2, B2) nutzen, die zum ersten bzw. zweiten Satz von Frequenzen gehören und andere als die Kennzeichnungskanalfrequenzen sind, Frequenzwechsel ausgeführt werden, wobei die erste zeitliche Struktur (601) für jeden Rahmen die eine oder die andere der ersten und zweiten Frequenzen (A2, B2) auf allen Zeitintervallen (0-7) nutzt und die zweite zeitliche Struktur (602) für ihre Zeitintervalle die von der ersten Struktur (601) nicht genutzten Frequenzen nutzt, wobei ein Zeitintervall (0) in jedem Rahmen irgendeiner der ersten und zweiten zeitlichen Strukturen (601, 602) ungenutzt gehalten wird, um jeglichen Frequenzkonflikt zu vermeiden.

11. Verfahren nach einem der Ansprüche 1 bis 6, das bei einer Basis-Sende/Empfangsstation (BTS) angewendet wird, die drei konzentrische Zellen verwaltet, die eine erste, eine zweite bzw. eine dritte Frequenz (A, B, C) nutzen, wobei die zweite und dritte zeitliche Struktur (702, 703), die der zweiten bzw. dritten Zelle entsprechen, in bezug auf die erste und zweite zeitliche Struktur (701, 702) um eine erste bzw. zweite Verschiebungszeit, die durch das Verfahren nach Anspruch 5 bestimmt sind, verschoben sind und die Verschiebung zwischen der ersten und dritten Struktur (701, 703) geringer als die Dauer eines Zeitintervalls ist, dadurch gekennzeichnet, daß für jede zeitliche Struktur (701, 702, 703) die jedem aufeinanderfolgenden Rahmen zugeteilte Frequenz gewechselt wird, wobei ein Zeitintervall mit vorbestimmtem Rang in jedem Rahmen jeder zeitlichen Struktur (701, 702, 703) ungenutzt gehalten wird, so daß zu jedem Zeitpunkt die jeweiligen Zeitintervalle jeder zeitlichen Struktur verschiedene Frequenzen aufweisen oder ungenutzt sind, um jeden Frequenzkonflikt zu vermeiden.

12. Verfahren nach einem der Ansprüche 1 bis 6, das bei einer Basis-Sende/Empfangsstation (BTS) angewendet wird, die einen Satz von konzentrischen Zellen verwaltet, wobei die jeweiligen zeitlichen Strukturen der beiden äußeren Zellen des Satzes eine Verschiebung aufweisen, die größer als ein Zeitintervall ist, dadurch gekennzeichnet, daß in jedem Rahmen der zeitlichen Strukturen jeder Zelle ein zusätzliches Zeitintervall weggelassen wird.

13. Verfahren nach einem der Ansprüche 1 bis 6, das bei einer Basis-Sende/Empfangsstation (BTS) angewendet wird, die einen Satz von konzentrischen Zellen verwaltet, wobei die jeweiligen zeitlichen Strukturen der beiden äußeren Zellen des Satzes eine Verschiebung aufweisen, die größer als ein Zeitintervall ist, dadurch gekennzeichnet, daß die Zellen zu Gruppen umgruppiert werden, die höchstens drei aufeinanderfolgende Zellen umfassen, und in jeder dieser Gruppen ein Frequenzsprung ausgeführt wird.

14. Verfahren nach einem der Ansprüche 1 bis 6, das bei einer Basis-Sende/Empfangsstation (BTS) angewendet wird, die mehrere Zellen verwaltet, insbesondere eine erste und eine zweite Zelle, denen eine erste und eine zweite zeitliche Struktur (801, 803) zugeordnet sind, dadurch gekennzeichnet, daß es die Erzeugung einer ersten resultierenden zeitlichen Struktur (802) umfaßt, die mit der ersten zeitlichen Basisstruktur (801) synchron ist und in jedem ihrer Rahmen eine erste Gruppe von aufeinanderfolgenden Zeitintervallen (0-4), die mobilen Geräten, die sich in der ersten Zelle befinden, zugeteilt und mit den Zeitintervallen desselben Rangs in der ersten zeitlichen Struktur (801) synchron sind, ein ungenutztes Zeitintervall (5) und eine zweite Gruppe von aufeinanderfolgenden Zeitintervallen (6, 7) umfaßt, die mobilen Geräten, die sich in der zweiten Zelle befinden, zugeteilt und mit den Zeitintervallen desselben Rangs in der zweiten zeitlichen Struktur (803) synchron sind.

15. Verfahren nach Anspruch 14, das bei einem Satz von Zellen angewendet wird, denen jeweils ein Satz von Frequenzen zugeordnet ist, dadurch gekennzeichnet, daß es außerdem beim Übergang von einem Rahmen zum anderen einen Frequenzsprung umfaßt.

16. Verfahren nach einem der Ansprüche 7 bis 15, dadurch gekennzeichnet, daß die Frequenzwechsel in einem zyklischen Frequenzsprung bestehen.

17. Verfahren nach Anspruch 16, dadurch gekennzeichnet, daß die Frequenzwechsel bei jedem neuem Rahmen ausgeführt werden.

18. Verfahren nach einem der Ansprüche 7 bis 15, dadurch gekennzeichnet, daß die Frequenzwechsel in pseudozufälligen Frequenzsprüngen bestehen.

19. Verfahren nach einem der vorhergehenden Ansprüche, dadurch gekennzeichnet, daß jedes Mal, wenn eine zeitliche Struktur ungenutzte Zeitintervalle für ein mobiles Gerät umfaßt, in diesen Zeitintervallen Stücke einer belanglosen Kette oder Füllung gesendet werden.

20. Verfahren nach einem der vorhergehenden Ansprüche, wenn ein sich bewegendes mobiles Gerät während einer Handover-Prozedur von einer Ausgangszelle (902, 903, 904, 905) zu einer neuen Zelle im Satz von konzentrischen Zellen (900, 901), die eine Basiszelle (900) umfassen und durch das Verfahren verwaltet werden, übergehen muß, dadurch gekennzeichnet, daß zur Bestimmung dieser neuen Zelle die üblichen Leistungsbilanzregeln durch Regeln zur Lokalisierung der Ausgangszelle (902, 903, 904, 905) in bezug auf die konzentrischen Zellen ersetzt werden.

21. Verfahren nach Anspruch 20, dadurch gekennzeichnet, daß im Fall einer Ausgangszelle (902), die von der Basiszelle (900) vollständige überdeckt wird, die Handover-Prozedur unter Ausschluß der anderen konzentrischen Zellen zur Basiszelle hin angewendet wird.

22. Verfahren nach Anspruch 20, dadurch gekennzeichnet, daß im Fall einer Ausgangszelle (903), die von einer Zelle (901), die zu den konzentrischen Zellen (900, 901) gehört, aber nicht von anderen konzentrischen Zellen mit kleinerem Radius als die Ausgangszelle, insbesondere die Basiszelle (900), vollständig überdeckt wird, die Handover-Prozedur zu der Zelle (901) hin angewendet wird, die die Ausgangszelle (903) vollständig überdeckt.

23. Verfahren nach Anspruch 20, dadurch gekennzeichnet, daß im Fall einer Ausgangszelle (904), die von einer einzigen konzentrische Zelle (901) teilweise überdeckt wird, die Handover-Prozedur unter Ausschluß jeder anderen konzentrischen Zelle (900) zu der einzigen Zelle (901) hin angewendet wird, die die Ausgangszelle (904) teilweise überdeckt.

24. Verfahren nach Anspruch 20, dadurch gekennzeichnet, daß im Fall einer Ausgangszelle (905), die von einer ersten und einer zweiten konzentrischen Zelle (900, 901) teilweise überdeckt wird, die Handover-Prozedur zu der konzentrischen Zelle (900) hin angewendet wird, die die Antenne (A) der Ausgangszelle (905) abdeckt.

25. Verfahren nach Anspruch 24, dadurch gekennzeichnet, daß, wenn die Handover-Prozedur fehlgeschlagen ist und wenn das in der Ausgangszelle (905) vorhandene mobile Gerät eine zeitliche Verschiebung aufweist, die einer Strecke entspricht, die größer als der Innenradius (910) der ersten konzentrischen Zelle (901), verringert um den Abstand (911) ist, der die jeweiligen Antennen (Ao, A) der ersten konzentrischen Zelle (900) und der Ausgangszelle (905) trennt, wird eine neue Handover-Prozedur zu der konzentrischen Zelle (901) hin angewendet, die die Antenne (A) der Ausgangszelle (905) nicht abdeckt.

26. Basis-Sende/Empfangsstation (BTS) (300) zur Verwaltung eines Satzes von Kommunikationszellen (C1, C2, Cn), die Mittel (301) zur Verbindung mit einem Basisvermittlungszentrum (BSC), Mittel (302) zur Verbindung mit einer Sendeantenne (304), Mittel (303) zum Vorverstärken von Signalen umfaßt, die von einer Empfangsantenne (305) stammen, die das Verfahren nach einem der vorhergehenden Ansprüche durchführt, dadurch gekennzeichnet, daß sie außerdem für jede Zelle numerische Mittel (312, 322) zum Verwalten der dieser Zelle entsprechenden zeitlichen Strukturen umfaßt, wobei diese numerischen Verwaltungsmittel (312, 322) einerseits mit den Mitteln (301) zur Verbindung mit dem Basisvermittlungszentrum (BSC) und andererseits am Sendeausgang mit Leistungsverstärkungsmitteln (311, 321), die oberhalb der Mittel (302) zur Verbindung mit der Sendeantenne (304) angeordnet sind, und am Empfangseingang mit Leistungsvorverstärkungsmitteln (303) verbunden sind.

27. Basis-Sende/Empfangsstation (BTS) nach Anspruch 26, dadurch gekennzeichnet, daß jeder Zelle getrennte numerische Verwaltungsmittel entsprechen, die bei Sendung mit getrennten Leistungsverstärkungsmitteln verbunden sind, und daß sie außerdem erste Schaltmittel zur Verbindung egal welcher der getrennten numerischen Verwaltungsmittel mit egal welchen der getrennten Leistungsverstärkungsmitteln umfaßt.

28. Basis-Sende/Empfangsstation (BTS) nach Anspruch 26, dadurch gekennzeichnet, daß jeder Zelle getrennte numerische Verwaltungsmittel (312, 322) entsprechen, die bei Sendung mit gemeinsamen Verstärkungsmitteln (308) verbunden sind.

29. Basis-Sende/Empfangsstation (BTS) nach einem der Ansprüche 26 bis 28, die für jede Zelle getrennte numerische Verwaltungsmittel umfaßt und bei Empfang mit mehreren Empfängern verbunden ist, die jeweils getrennte Vorverstärkungsmittel umfassen, dadurch gekennzeichnet, daß sie außerdem zweite Schaltmittel zur Verbindung egal welcher der getrennten Vorverstärkungsmittel mit egal welchen der getrennten numerischen Verwaltungsmitteln umfaßt,

30. Basis-Sende/Empfangsstation nach einem der Ansprüche 26 bis 29, dadurch gekennzeichnet, daß der Satz von Zellen eine Basiszelle (C1), die auf die Basis-Sende/EmpfangsstatiOn (BTS) (20) zentriert ist und einen vorbestimmten Radius (R1) hat, und konzentrische Zellen (C2, Cn) umfaßt.

31. Basis-Sende/Empfangsstation nach einen der Ansprüche 26 bis 30, dadurch gekennzeichnet, daß der Satz von Zellen nur konzentrische ringförmige Zellen umfaßt.

32. Anwendung des Verfahrens nach einem der Ansprüche 1 bis 25 und der Basis-Sende/Empfangsstation nach einem der Ansprüche 26 bis 31 bei einem GSM-Kommunkationssystem, wobei die jeweiligen Radien der ersten und zweiten Zellen im wesentlichen gleich 35 km und 70 km sind.

FIG.1B

FIG.1A

FIG.2

FIG.3

FIG.4

EP 0 614 290 B1

501

| 0 | 1 | 2 | 3 | 4 | 5 | 6 | 7 | 0 | 1 | 2 | 3 | 4 | 5 | 6 | 7 | 0 | 1 | 2 | 3 | 4 | 5 |
| A | A | A | A | A | A | A | A | ▨ | A | B | B | B | B | B | B | ▨ | A | A | A | A | A |

| 0 | 1 | 2 | 3 | 4 | 5 | 6 | 7 | 0 | 1 | 2 | 3 | 4 | 5 | 6 | 7 | 0 | 1 | 2 | 3 | 4 | 5 |
| B | ▨ | B | B | B | B | B | B | ▨ | A | A | A | A | A | A | B | ▨ | B | B | B | B | B |

511 $t_1$ $T_i$ $T_{i+1}$ $T_{i+2}$

**FIG. 5B**

524

502   521   523   521   522   525   521

511

500

501

20

510

**FIG. 5A**

601

| 0 | 1 | 2 | 3 | 4 | 5 | 6 | 7 | 0 | 1 | 2 | 3 | 4 | 5 | 6 | 7 | 0 | 1 | 2 | 3 | 4 | 5 |
| $A_2$ | $A_2$ | $A_2$ | $A_2$ | $A_2$ | $A_2$ | $A_2$ | $A_2$ | $B_2$ | $B_2$ | $B_2$ | $B_2$ | $B_2$ | $B_2$ | $B_2$ | $B_2$ | $A_2$ | $A_2$ | $A_2$ | $A_2$ | $A_2$ | $A_2$ |

| 0 | 1 | 2 | 3 | 4 | 5 | 6 | 7 | 0 | 1 | 2 | 3 | 4 | 5 | 6 | 7 | 0 | 1 | 2 | 3 | 4 | 5 | 6 |
| ▨ | $B_2$ | $B_2$ | $B_2$ | $B_2$ | $B_2$ | $B_2$ | $B_2$ | ▨ | $A_2$ | $A_2$ | $A_2$ | $A_2$ | $A_2$ | $A_2$ | $A_2$ | ▨ | $B_2$ | $B_2$ | $B_2$ | $B_2$ | $B_2$ | $B_2$ |

602

**FIG. 6**

margin: EP 0 614 290 B1

701

| 0 | 1 | 2 | 3 | 4 | 5 | 6 | 7 | 0 | 1 | 2 | 3 | 4 | 5 | 6 | 7 | 0 | 1 | 2 | 3 | 4 | 5 |
A  A  A  A  A  A  A  A  ▨  A  B  B  B  B  B  B  ▨  A  C  C  C  C  C

| 0 | 1 | 2 | 3 | 4 | 5 | 6 | 7 | 0 | 1 | 2 | 3 | 4 | 5 | 6 | 7 | 0 | 1 | 2 | 3 | 4 | 5 | 6 |
B  ▨  B  B  B  B  B  B  B  ▨  C  C  C  C  C  C  B  ▨  A  A  A  A  A  A

702

| 0 | 1 | 2 | 3 | 4 | 5 | 6 | 7 | 0 | 1 | 2 | 3 | 4 | 5 | 6 | 7 | 0 | 1 | 2 | 3 | 4 | 5 | 6 |
C  ▨  C  C  C  C  C  C  C  C  ▨  A  A  A  A  A  A  C  ▨  B  B  B  B  B

703

FIG.7

802  801  808

| 0 | 1 | 2 | 3 | 4 | 5 | 6 | 7 | 0 | 1 | 2 | 3 | 4 | 5 | 6 | 7 | 0 | 1 | 2 | 3 | 4 | 5 | 6 | 7 | 0 |
| 0 | 1 | 2 | 3 | 4 | ▨ | 6 | 7 | ▨ | 0 | 1 | 2 | 3 | 4 | ▨ | 6 | 7 | ▨ | 0 | 1 | 2 | 3 | 4 | ▨ | 6 | 7 | ▨ | 0 |

804  A  A  A  A  A  A  A  A  B  B  B  B  B  B  A  A  A  A  A  A  A
809

| 0 | 1 | 2 | 3 | 4 | 5 | 6 | 7 | 0 | 1 | 2 | 3 | 4 | 5 | 6 | 7 | 0 | 1 | 2 | 3 | 4 | 5 | 6 | 7 | 0 | 1 |
B  ▨  B  B  B  B  B  B  ▨  A  A  A  A  A  B  ▨  B  B  B  B  B  B  B  ▨

803  805

FIG.8A

806

| 0 | ▨ | 1 | 2 | 3 | ▨ | 5 | 6 | 7 | 0 | ▨ | 1 | 2 | 3 | ▨ | 5 | 6 | 7 | 0 | ▨ | 1 | 2 | 3 | ▨ | 5 | 6 | 7 | 0 |
807  B  ▨  B  B  B  ▨  B  B  B  B  ▨  A  A  A  ▨  A  A  A  B  ▨  B  B  B  ▨  B  B  B

FIG.8B

margin: EP 0 614 290 B1

FIG_9